# EUROPÄISCHE PATENTSCHRIFT

(11) **EP 0 564 899 B1**
(45) Veröffentlichungstag und Bekanntmachung des Hinweises auf die Patenterteilung: **17.04.1996**
(21) Anmeldenummer: 93104835.9
(22) Anmeldetag: 24.03.1993
(51) Int. Cl.: H02B 5/06, H02B 13/035

(54) **Hochspannungsschaltfeld**
High voltage switchboard
Tableau de distribution à haute tension

(30) Priorität: 30.03.1992 DE 4210368
(43) Veröffentlichungstag der Anmeldung: 13.10.1993
(73) Patentinhaber: ABB PATENT GmbH, D-68309 Mannheim (DE)
(72) Erfinder: Peitz, Theo, W-6450 Hanau 9 (DE); Neumaier, Heinrich, W-7613 Hausach (DE); Probst, Heinrich, W-8752 Blankenbach (DE)
(74) Vertreter: Rupprecht, Klaus, Dipl.-Ing.

(56) Entgegenhaltungen:
- EP-A- 0 077 547
- EP-A- 0 165 184
- DE-A- 3 732 454
- DE-U- 9 111 861
- FR-A- 2 550 665
- IEEE TRANSACTIONS ON POWER DELIVERY, Nr.3, Juli 1987, NEW YORK Seiten 791 - 798 T. MAEDA ET AL. 'Development of D-GIS aimed at easy restoration from internal fault'
- IEEE TRANSACTIONS ON POWER DELIVERY, Bd. PWRD-2, Nr. 3, Juli 1987, New York, US, Seiten 791-798; T. MAEDA et al.: "Development of D-GIS aimed at easy restoration from internal fault"

## Beschreibung

Die Erfindung betrifft ein metallgekapseltes gasisoliertes Hochspannungsschaltfeld gemäß Oberbegriff des Anspruches 1.

Ein solches geht aus der BBC-Druckschrift DSI102788D, Seite 5 vom Januar 1988 als bekannt hervor. Bei diesem Feld ist das Leistungsschaltergehäuse an Trägern aufgeständert. Damit wird Raum für den Schalterantrieb geschaffen, dessen Tellerfederpaket längs zum Schaltergehäuse zwischen diesem sowie der bodenseitigen Befestigungsebene angeordnet ist.

Der zugehörige Niederspannungssteuerschrank ist separat vom Schaltfeld neben dem längs des außen liegenden Sammelschienengehäuses verlaufenden Bedienungsgang angeordnet.

Dieses Schaltfeld baut weit ausladend und daher sperrig. Die Aufgabe der Erfindung ist es, einen besonders kompakten Aufbau für das Hochspannungsschaltfeld zu finden, wobei insbesondere die Höhenausladung reduziert werden soll.

Die Lösung gelingt mit den kennzeichnenden Merkmalen des Anspruches 1.

Da die Kolben-Zylinderanordnung sowie das zugehörige Tellerfederpaket nun nicht mehr längs zur Schaltergehäuseachse (Polerstreckung), sondern quer dazu, also liegend, angeordnet sind, kann der Schalterantrieb sehr flach ausfallen. Ordnet man ihn zudem am Kopfende, also an dem der Befestigungsebene gegenüberliegenden Ende des Schaltergehäuses an, so liefert er keinen Beitrag mehr zur Schaltfeldhöhe; dort befindet er sich vielmehr im Höhenschatten anderer Aufbauten, wie z. B. dem obligatorischen Spannungswandlergehäuse, das üblicherweise auf dem Kabelabgangsgehäuse aufgeflanscht ist. Die Umrisse des so wesentlich gedrungener gehaltenen Schaltfeldes lassen sich sogar auf Containereinbaugröße vermindern, wenn der Niederspannungsschaltschrank unmittelbar an den Schaltfeldaufbauten befestigt wird. Damit ist eine einzige transportierbare Einheit gebildet und die gesamte Verdrahtung kann bereits im Herstellerwerk erledigt werden.

Es empfiehlt sich, den Steuerschrank an dem außen liegenden Sammelschienengehäuse - in der Höhe verstellbar - festzusetzen. Um dessen Nutzen voll ausschöpfen zu können, sollte er im Betriebszustand bis zur Verankerungsebene des Schaltergehäuses hinabreichen. Beim Transport des Schaltschrankes muß der Steuerschrank dann allerdings höher gesetzt werden, da die dem Schaltergehäuse untergebauten Spreizfüße fehlen und das Schaltfeld somit auf den Steuerschrank aufsetzen würde. Ist das Schaltergehäuse am Betriebsort in die Normalhöhe durch Unterbau der Spreizfüße gebracht, so kann der Steuerschrank in seine tiefere, nämlich der Betriebsstellung, gebracht werden.

Die Ausführung der Verstellbarkeit des Steuerschrankes wird dem Fachmann keinerlei Schwierigkeiten bereiten. Es werden dafür entsprechende Anker am Sammelschienengehäuse notwendig sein. Zweckmäßigerweise erhält der Steuerschrank an der Rückseite quer zum Sammelschienengehäuse verlaufende Profilträger, die mit einem freien Schenkel zum Sammelschienengehäuse hin gerichtet sind. Befestigungsschrauben können durch die Anker gesteckt und in entsprechende Gewindelöcher am Profilträger eingeschraubt werden.

Wegen der Kompaktheit des Schaltfeldes ist es von Vorteil, wenn die mechanischen Stellungsanzeiger des Leistungsschalters sowie zumindest des Sammelschienentrennschalters in eine einzige Richtung, nämlich zur Bedienungsseite hin, zeigen.

Ein Ausführungsbeispiel der Erfindung wird mit Hilfe der anliegenden Figuren im folgenden näher dargestellt.

Es zeigen:
- Figur 1: eine Seitenansicht eines Feldes in Betriebsposition,
- Figur 2: eine perspektivische Darstellung eines Schaltfeldes als Transporteinheit mit außen liegendem Doppelsammelschienensystem,
- Figur 3: eine Seitenansicht des aufgeschnittenen Schalter- sowie Antriebsgehäuses und
- Figur 4: eine Draufsicht auf das Schaltergehäuse nach Figur 3.

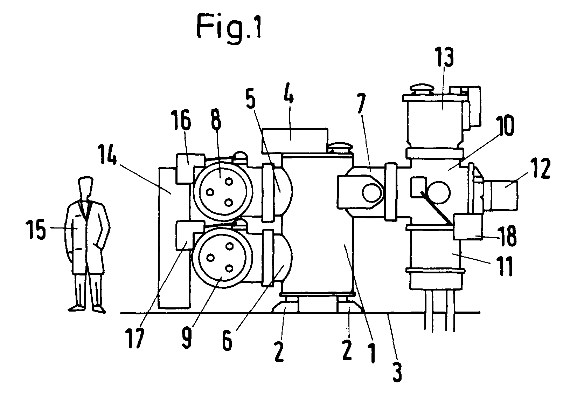

Bei dem installierten Schaltfeld nach Figur 1 erkennt man das aufrechtstehende zylindrische Schaltergehäuse 1. Es ist über Spreizfüße 2 am Boden (Befestigungsebene 3) verankert. An dem der Befestigungsebene entfernt liegenden Ende des Schaltergehäuses ist ein Antriebsgehäuse 4 aufgesetzt.

Das Schaltergehäuse 1 besitzt seitlich Rohransätze 5, 6 sowie an der gegenüberliegenden Längsseite den Rohransatz 7. An den Rohransätzen 5, 6 sind jeweils Sammelschienengehäuse 8, 9 angeflanscht; am Rohransatz 7 hingegen das Kabelendverschlußgehäuse 10. Letzteres trägt noch den eigentlichen Kabelendverschluß 11, einen Erdungsschalter 12 sowie - dem Kabelendverschluß 11 gegenüberliegend - ein Spannungswandlergehäuse 13.

An den übereinander angeordneten, quer zum Schaltergehäuse 1 verlaufenden Sammelschienengehäusen 8, 9 ist der quaderförmige Niederspannungssteuerschrank 14 befestigt. Er reicht nahezu bis zur Befestigungsebene 3 und zeigt mit seiner dem Schaltfeld abgewandten Breitseite zum Bedienungsstandort, auf dem eine Person 15 postiert ist.

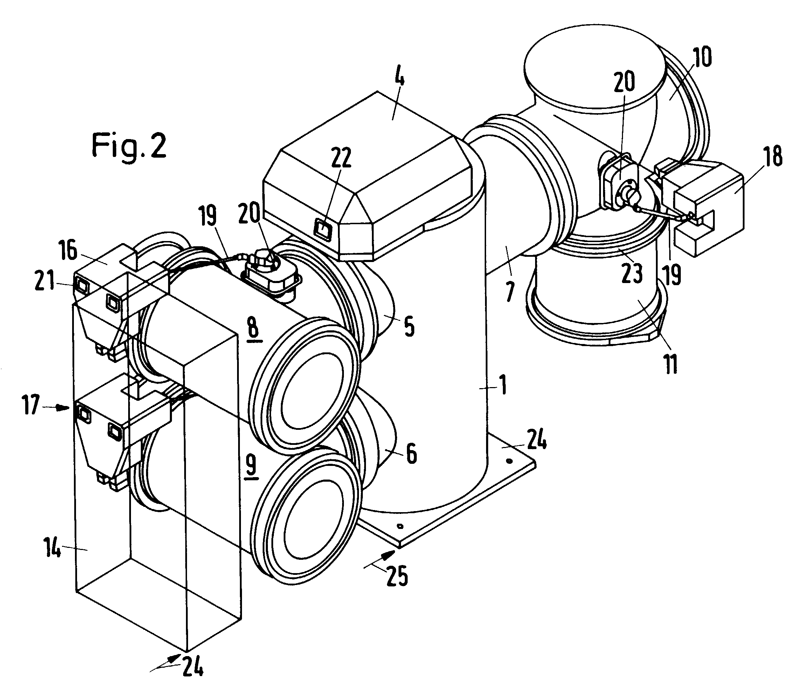

Den Sammelschienen sowie dem Kabelendverschluß sind Trennschalterantriebe 16, 17 bzw. 18 zugeordnet. Wie insbesondere in Figur 2 zu erkennen ist, sind die Antriebe über Gelenkwellen 19 mit Zwischengetrieben 20 verbunden. Vom Zwischengetriebe aus greift eine Antriebswelle (nicht sichtbar) zur Betätigung des Trennschalters durch die Metallkapselung.

Die Trennschalterantriebe 16, 17 sind - ebenso wie der Niederspannungssteuerschrank 14 - an den Sammelschienengehäusen 8, 9 befestigt. Sie sind so postiert, daß deren Stellungsanzeiger 21 vom Bedienungsstandort aus eingesehen werden können. Das gleiche gilt für den Stellungsanzeiger 22 des sich im Antriebsgehäuse 4 befindlichen Leistungsschalterantriebes.

Der nicht sichtbare Stellungsanzeiger des Trennschaltantriebes 18 des Kabelendverschlusses weist demgegenüber in eine Richtung, die den Stellungsanzeiger 21, 22 entgegengesetzt ist. Er ist dann von einem Bedienungsstandort an der dem Steuerschrank 14 gegenüberliegenden Seite des Schaltfeldes aus einsehbar. Die Befestigung des Trennschalterantriebes 18 ist seitlich an einer freien Seite des zum Kabelendverschluß 11 gerichteten Flansches 23 befestigt.

Bei dem in Figur 2 gezeigten Feld ist das Schaltergehäuse 1 am Befestigungsende erkennbar mit einer den Rohrdurchmesser des Gehäuses übergreifenden Platte 24 abgeschlossen. An dieser Platte werden am Aufstellungsort die Spreizfüße 2 befestigt. Beim Transport des Feldes muß daher sichergestellt sein, daß die Unterkante (siehe Pfeil 24) des Steuerschrankes 14 höhergesetzt ist als die Unterkante (siehe Pfeil 25) des Schaltergehäuses 1. Aus diesem Grunde ist der Steuerschrank 14 in der Höhe, also quer zu den Sammelschienengehäusen 8, 9, verstellbar. In der Betriebsstellung wird er wieder in die tiefere Position (siehe Figur 1) abgesenkt. Der Aufhänge - bzw. Verstellmechanismus für den Steuerschrank ist nicht dargestellt; dessen Verwirklichung ist mit üblichen handwerklichen Maßnahmen leicht zu bewältigen.

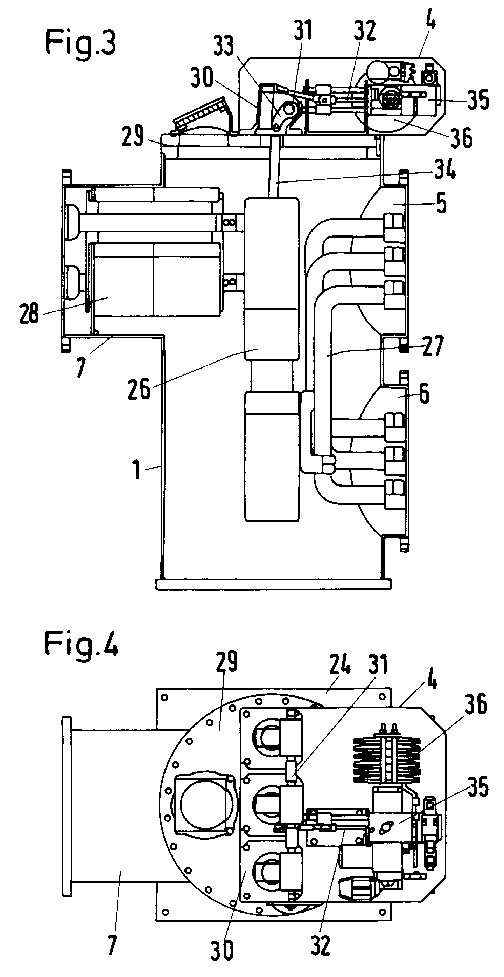

Das in Figur 3 aufgeschnittene Schaltergehäuse 1 ist gegenüber den Figuren 1 und 2 in einer um 180° gedrehten Position dargestellt. Zu erkennen sind hier die Schalterpole 26 sowie die Zu- bzw. Ausleiter 27. Im Rohransatz 7 findet noch ein Durchführungsstromwandler 28 Platz.

Das Schaltergehäuse 1 ist antriebsseitig von einer Kopfplatte 29 verschlossen. Auf dieser sind drei Kurbelgehäuse 30 dicht aufgesetzt. Letztere werden von einer gemeinsamen von Phase zu Phase isolierten Antriebswelle 31 dicht durchdrungen.

Betätigt wird die Welle 31 von einer Schubstange 32, die auf eine auf der Welle 31 aufsitzenden Kurbel einwirkt. Abgangsseitig sitzen auf der Welle in den Kurbelgehäusen jeweils Hebel 33 auf. Letztere sind an isolierende Betätigungsstangen 34, die die Schalterpole 26 antreiben, angelenkt. Die Schubstange 32 wird von einem Kolben der Kolben-Zylinderanordnung 35 angetrieben. Wesentlich dabei ist, daß letztere liegend angeordnet ist, und daß das mit ihr als Kraftspeicher zusammenarbeitende Tellerfederpaket 36 ebenfalls liegend, nämlich quer zu den Längsachsen der Schalterpole 26 bzw. des Schaltergehäuses 1 angeordnet ist. Dadurch kann der Schalterantrieb recht flach ausfallen und beansprucht in Feldhöhe keinen zusätzlichen Bauraum. Wie in Figur 1 zu erkennen, wird die Schaltfeldhöhe nunmehr ausschließlich von dem Wandlergehäuse 13 bestimmt, in dessen Höhenschatten sich der Schalterantrieb (Antriebsgehäuse 4) befindet. Der verwendete dargestellte Antrieb ist ausführlicher in dem DE-U 91 11 861 dargestellt.

## Patentansprüche

1. Metallgekapseltes gasisoliertes Hochspannungsschaltfeld, mit einem zylindrischen Leistungsschaltergehäuse (1), das an einem Ende fest verankert ist und mindestens ein quer dazu verlaufendes Sammelschienengehäuse (8, 9) trägt, und ein weiterer Flanschanschluß am Schaltergehäuse (1) für ein Kabelendverschlußgehäuse (10) vorgesehen ist, wobei Trennschalter (16, 17) vorhanden sind, die jeweils dem Sammelschienensystem bzw. dem Kabelabgang zugeordnet sind, sowie mit einem schaltfeldbezogenen quaderförmigen Niederspannungssteuerschrank (14), der von einem vor dem außenliegenden Sammelschienengehäuse gelegenen Bedienungsort (-gang) aus zugänglich, und der Leistungsschal-terantrieb von einer Kolben-Zylinderanordnung (35) gebildet ist, die mit einem Tellerfederpaket (36) als Kraftspeicher zusammenarbeitet, dadurch gekennzeichnet, daß der Leistungsschalterantrieb an dem der Befestigungsebene (3) entfernt liegenden Ende des Schaltergehäuses (1) aufgesetzt ist und die Achse seines Tellerfederpaketes (36) sowie der Kolben-Zylinderanordnung (35) quer zur Längsachse des Schaltergehäuses (1) angeordnet und daß der Niederspannungssteuerschrank (14) unmittelbar an Schaltfeldelementen verankert ist.

2. Schaltfeld nach Anspruch 1, dadurch gekennzeichnet, daß der Niederspannungssteuerschrank (14) mindestens an einem außenliegenden Sammelschienengehäuse (8, 9) - in der Höhe, d. h. in Richtung zur Schaltergehäuselängsachse - verstellbar festgemacht ist.

3. Schaltfeld nach Anspruch 1 oder 2, dadurch gekennzeichnet, daß die Antriebe der Sammelschienentrennschalter (16, 17) an der bzw. den Sammelschienengehäusen (8, 9) neben dem Niederspannungsssteuerschrank (14) festgemacht sind und deren mechanische Stellungsanzeiger (21) zum Bedienungsort (Steuerschrankseite) hin gerichtet sind.

4. Schaltfeld nach einem der Ansprüche 1 bis 3, dadurch gekennzeichnet, daß der mechanische Stellungsanzeiger (22) des Leistungsschalterantriebes ebenfalls zum Bedienungsort (Steuerschrankseite) hin gerichtet ist.

5. Schaltfeld nach Anspruch 1, dadurch gekennzeichnet, daß der Trennschalterantrieb (18) des Kabelendverschlusses sich seitlich am Kabelendverschlußgehäuse (10) in Höhe des zu den Endverschlüssen gerichteten Flansches (23) angebracht ist, und der mechanische Stellungsanzeiger des Trennschalterantriebes (18) zu der der Bedienungsseite des Steuerschrankes abgewandten Seite hin gerichtet ist.

6. Schaltschrank nach einem der Ansprüche 1 bis 5, dadurch gekennzeichnet, daß der Niederspannungssteuerschrank (14) an der zu den Sammelschienengehäusen (8, 9) gerichteten Seite zwei längs zum Schaltergehäuse (1) verlaufende Profilschienen trägt, in dessen abstehenden freien Schenkeln jeweils mindestens zwei in verschiedenen Höhen angeordnete Schraubengewindeöffnungen eingebracht sind, in die von Trägern der Sammelschienengehäuse aus Befestigungsschrauben eindrehbar sind.

## Claims

1. Metal-enclosed, gas-insulated, high-voltage switchpanel having a cylindrical circuit-breaker enclosure (1) which is anchored fixedly at one end and supports at least one busbar housing (8, 9) extending at right angles thereto, and a further flanged end is provided on the circuit-breaker enclosure (1) for a cable sealing box housing (10), disconnecters (16, 17) being present which are respectively assigned to the busbar system and the outgoing cable, and having a switchpanel-related cuboid low-voltage control cabinet (14) which is accessible from an operating site (operating gangway) situated in front of the external busbar housing, and the circuit-breaker drive mechanism is formed by a piston/cylinder arrangement (35) which interacts with a cup-spring assembly (36) as an energy store, characterised in that the circuit-breaker drive mechanism is seated on the end of the breaker enclosure (1) remote from the fastening plane (3), and the axis of its cup-spring assembly (36) and of the piston/cylinder arrangement (35) is arranged at right angles to the longitudinal axis of the breaker enclosure (1), and in that the low-voltage control cabinet (14) is anchored directly on switchpanel elements.

2. Switchpanel according to Claim 1, characterised in that the low-voltage control cabinet (14) is fixed adjustably in height, that is to say in the direction towards the longitudinal axis of the breaker enclosure at least on an external busbar housing (8, 9).

3. Switchpanel according to Claim 1 or 2, characterised in that the drive mechanisms of the busbar disconnecters (16, 17) are fixed on the busbar housing or housings (8, 9) next to the low-voltage control cabinet (1) and their mechanical position indicators (21) are directed towards the operating site (control cabinet side).

4. Switchpanel according to one of Claims 1 to 3, characterised in that the mechanical position indicators (22) of the circuit-breaker drive mechanism is likewise directed towards the operating site (control cabinet side).

5. Switchpanel according to Claim 1, characterised in that the disconnecter drive mechanism (18) of the cable box is provided at the side on the cable sealing box housing (10) at the height of the flange (23) directed towards the boxes, and the mechanical position indicator of the disconnecter drive mechanism (18) is directed towards the side averted from the operating side of the control cabinet.

6. Switch cabinet [sic] according to one of Claims 1 to 5, characterised in that the low-voltage control cabinet (14) supports on the side directed towards the busbar housings (8, 9) two mounting channels, which extend longitudinally relative to the breaker enclosure (1) and in the projecting free limbs of which there are respectively inserted at least two screw thread openings, which are arranged at different heights and into which fastening screws can be turned starting from supports of the busbar housings.

## Revendications

1. Tableau de distribution à haute tension, blindé et étanche, comportant une boîte de disjoncteur de puissance cylindrique (1) qui est ancrée solidement à une extrémité, qui supporte, au moins une boîte (8, 9) de barres omnibus, disposée transversalement, et qui est pourvue d'un raccord à bride supplémentaire disposé sur cette boîte de disjoncteur (1) pour le montage d'une boîte (10) d'extrémité de câbles, des sectionneurs (16, 17) étant associés respectivement au système de barres omnibus et à la sortie de câbles, ainsi qu'une armoire de commande (14) à basse tension qui est accessible à partir d'un endroit de commande ou d'une passerelle de commande située devant la boîte de barres omnibus extérieure, et le dispositif d'actionnement du disjoncteur est constitué par un ensemble piston-cylindre (35) qui coopère avec un ensemble (36) de rondelles-ressorts en tant qu'accumulateur de force, caractérisé en ce que le mécanisme d'actionnement du disjoncteur est placé à l'extrémité de la boîte (1) du disjoncteur éloignée du plan de fixation (3), et que l'axe de son ensemble (36) de rondelles-ressorts et de l'ensemble piston-ressort (35) est disposé transversalement à l'axe longitudinal de la boîte (1) du disjoncteur et que l'armoire de commande (14) à basse tension est fixée directement à des éléments du tableau de distribution.

2. Tableau de distribution selon la revendication 1, caractérisé en ce que l'armoire (14) à basse tension est fixée de façon réglable en hauteur, c'est-à-dire dans la direction de l'axe longitudinal de la boîte de disjoncteur, sur au moins une boîte (8, 9) de barres omnibus extérieure.

3. Tableau de distribution selon la revendication 1 ou 2, caractérisé en ce que les mécanismes d'actionnement des sectionneurs (16, 17) de barres omnibus sont fixés respectivement à la ou aux boîte(s) (8, 9) de barres omnibus près de l'armoire de commande (14) à basse tension et que leurs dispositifs mécaniques (21) d'indication de position sont orientés vers l'endroit de commande (côté armoire de commande).

4. Tableau de distribution selon l'une des revendications 1 à 3, caractérisé en ce que le dispositif mécanique (22) d'indication de position du mécanisme d'actionnement de disjoncteur est également orienté vers l'endroit de commande (côté armoire de commande).

5. Tableau selon la revendication 1, caractérisé en ce que le mécanisme (18) d'actionnement de sectionneurs de la boîte de jonction de câbles est monté latéralement sur la boîte (10) de jonction de câbles à la hauteur de la bride (23) dirigée vers les couvercles d'extrémité, et que le dispositif mécanique d'indication de position du mécanisme (18) d'actionnement de sectionneur est orienté vers le côté éloigné de la face de commande de l'armoire de commande.

6. Tableau de distribution selon les revendications 1 à 5, caractérisé en ce que l'armoire de commande (14) à basse tension porte, sur son côté orienté vers les boîtes (8, 9) de barres omnibus, deux rails profilés s'étendant le long de la boîte (1) de disjoncteur, dont les ailes libres, dressées vers l'extérieur, comportent au moins deux trous taraudés ménagés à des hauteurs différentes et dans lesquels sont vissées des vis de fixation sortant de supports de la boîte de barres omnibus.
